Europäisches Patentamt

European Patent Office

Office européen des brevets

(11) Publication number: **0 370 435**
A2

# EUROPEAN PATENT APPLICATION

(21) Application number: 89121455.3

(51) Int. Cl.5: **G06F 15/70**

(22) Date of filing: **20.11.89**

(30) Priority: **21.11.88 JP 294372/88**

(43) Date of publication of application:
**30.05.90 Bulletin 90/22**

(84) Designated Contracting States:
**AT BE CH DE ES FR GB GR IT LI NL SE**

(71) Applicant: **OMRON TATEISI ELECTRONICS CO.**
**10, Tsuchido-cho Hanazono Ukyo-ku**
**Kyoto 616(JP)**

(72) Inventor: **Urasaki, Kazuaki OMRON TATEISI**
**ELECTRONICS CO.**
**Intellectual Property Center 20, Igadera**
**Shimokaiinji Nagaokakyo-shi Kyoto 617(JP)**

(74) Representative: **WILHELMS, KILIAN &**
**PARTNER Patentanwälte**
**Eduard-Schmid-Strasse 2**
**D-8000 München 90(DE)**

(54) Image preprocessor.

(57) An image preprocessor for preprocessing a video signal which represents an image to be recognized includes an imaging unit for imaging an object of recognition and outputting a video signal representing the image of the object, an inference unit for preprocessing the video signal by an inference based on settable processing rules and outputting results of the inference as preprocessing data, and a memory device for storing the preprocessing data for the purpose of recognition processing.

Fig.1

# IMAGE PREPROCESSOR

## BACKGROUND OF THE INVENTION

Field of the Invention:

This invention relates to an image preprocessor used to preprocess a video signal, which represents an input image obtained by imaging an object of recognition, in various types of inspection apparatus such as apparatus for inspecting substrates or printed-circuit boards, printing, blood, etc.

Description of the Prior Art:

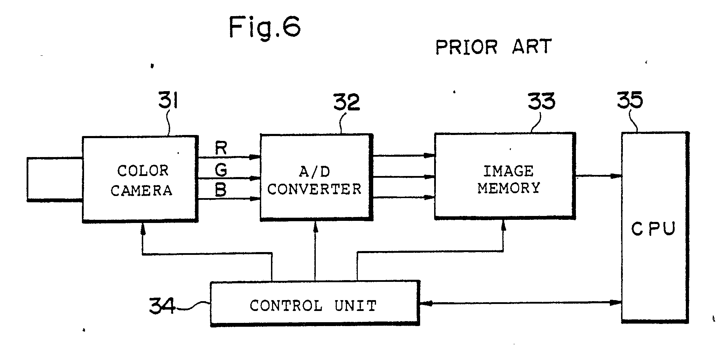

By way of example, a substrate inspecting apparatus is adapted to inspect a substrate by imaging an area of a substrate on which parts are mounted and determining, based on the image obtained, whether any of the mounted parts are missing, the acceptability of the mounted parts and the acceptability of soldering. The construction of such an apparatus basically is as shown in Fig. 6.

As illustrated in Fig. 6, a color camera 31 which includes a solid-state image pick-up device such as a CCD responds to an instruction from a CPU 35 by imaging a substrate undergoing inspection and outputting a video signal indicative of the image. In synchronization with a synchronizing signal provided by a control unit 34, the color camera 31 outputs color video signals R, G, B of the three primary colors. These signals represent the input image. An A/D converter 32 converts the color video signals R, G, B, which are analog quantities, into, say, six-bit digital signals at high speed and stores its output in an image memory 33 at a storage location thereof designated by an address corresponding to the X and Y coordinates of the input image. The data stored in the image memory 33 is subsequently processed by the CPU 35. At the completion of processing, the CPU 35 issues a command to the control unit 34 to accept the next image.

In the substrate inspecting apparatus constructed as set forth above, the converted digital output of each color video signal obtained from the A/D converter 32 is a composed of six bits, by way of example. If these items of data are stored in the image memory 33, it is required that the memory have a vary large storage capacity. For example, if the number of pixels in the input image is 512 pixels (longitudinally) x 490 pixels (horizontally), then the storage capacity required will be 512 x 490 x 6 bits x 3 colors = 4.5 megabits. In addition, a large amount of data processing will be necessary in order to subsequently execute preprocessing and processing required for recognition with regard to the data stored in the image memory 33. Thus, problems are encountered in terms of high cost and the large amount of processing time.

For example, in substrate inspection, processing for determining, based on the luminance and hue of each pixel, which pixel represents what portion of a part must be executed before judging whether the mounted parts are acceptable or not. In addition to this processing, it is also necessary to execute preprocessing for noise cancelling, edge emphasis, contour following and the like. Thus, the state of the art is such that a great amount of time is expended for these types of processing.

The only image preprocessors available in the prior art are for executing noise cancelling, edge emphasis, contour following, etc. These devices execute absolutely no preprocessing such as that for generating, in advance, data useful in terms of image recognition.

Furthermore, the functions in all of these preprocessors are fixed or "canned". For example, a problem encountered is that if a certain processor is to perform both noise cancelling and edge emphasis, then it will be required to provide a module for executing each type of preprocessing within the processor.

## SUMMARY OF THE INVENTION

An object of the present invention is to provide a novel image processor in which an image memory with a small capacity will suffice, and in which processing time can be greatly curtailed.

Another object of the present invention is to provide an image processor in which, by making it possible to set and alter a rule, the particulars of preprocessing can be simply altered in conformity with the set or altered rule.

According to the present invention, the foregoing objects are attained by providing an image preprocessor for preprocessing a video signal which represents an image to be recognized, comprising imaging means for imaging an object of recognition and outputting a video signal representing an image of the object, inference means for preprocessing the video signal by an inference based on settable processing rules and outputting results of the inference as preprocessing data, and memory means for storing the preprocessing data for the purpose of recognition processing.

In order to make high-speed, sophisticated preprocessing possible, the present invention is so adapted that inference is performed using fuzzy processing rules as the processing rules.

Further, in order to execute recognition processing rapidly after preprocessing, the inference means of the present invention employs means for converting each pixel of an image into a code representing a region of the object of recognition, the code being delivered as an output.

In operation, the inference means performs an inference based on the predetermined processing rules to execute preprocessing of the image with regard to the video signal, outputted by the imaging means, indicative of the object of recognition. The preprocessing data is stored in the memory means. In accordance with this approach, the results of the inference are coded to enable compression of the input image data, thereby making it possible to reduce the capacity of the memory means and curtain processing time. In addition, preprocessing useful in terms of image recognition is possible. For example, if it is arranged to indicate, by the aforementioned codes, which pixel of the image is what portion of the object of recognition, subsequent recognition processing can be executed in rapid fashion.

When fuzzy processing rules are employed as the processing rules in the inference means, the latter can be constructed using a high-speed fuzzy processor, thus making high-speed, highly sophisticated processing possible. Moreover, altering the particulars of preprocessing can be achieved with ease by interchanging fuzzy processing rules or modifying the form of membership functions.

Other features and advantages of the present invention will be apparent from the following description taken in conjunction with the accompanying drawings.

## BRIEF DESCRIPTION OF THE DRAWINGS

Fig. 1 is a block diagram illustrating an embodiment of the construction of a preprocessor according to the present invention;

Fig. 2 is a block diagram illustrating an example of the construction of a fuzzy inference unit shown in Fig. 1;

Fig. 3 is a plan view showing the status of mounted parts;

Fig. 4 is an electric circuit diagram illustrating a specific example of a determination unit shown in Fig. 2;

Fig. 5 is a graph showing an example of membership functions; and

Fig. 6 is a block diagram illustrating an example of the prior art.

## DESCRIPTION OF THE PREFERRED EMBODIMENT

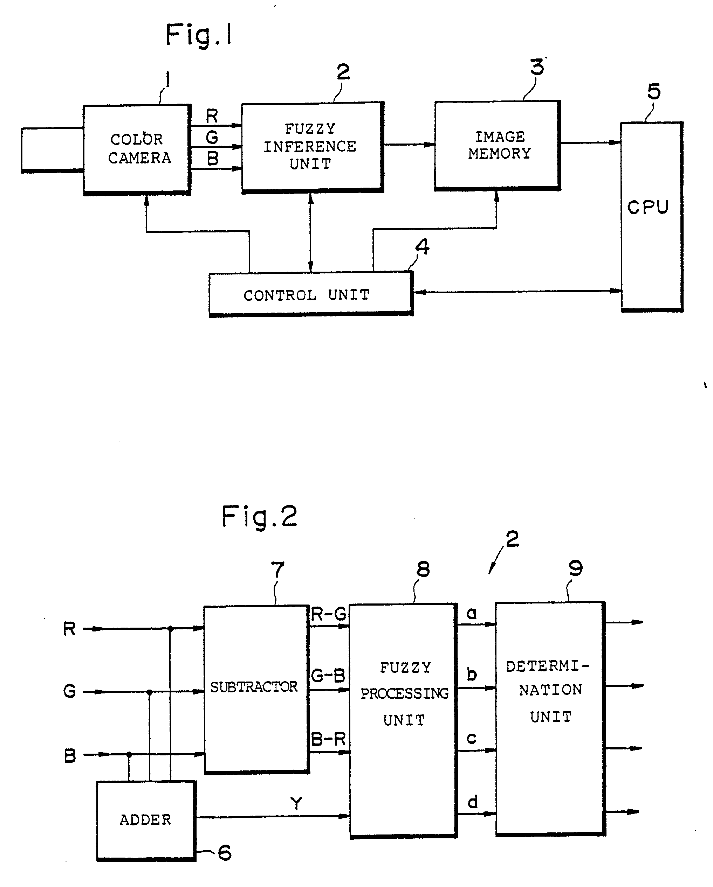

Fig. 1 shows an example in which the image preprocessor of the present invention is applied to a substrate inspecting apparatus. The image preprocessor includes a color camera 1 including a CCD, a fuzzy inference unit 2, an image memory 3, a control unit 4 and a CPU 5.

This substrate inspecting apparatus is adapted to perform inspection by judging the acceptability of parts mounted on a substrate, i.e., by determining whether predetermined parts [square chips, cylindrical chips, IC's (integrated circuits), etc.] are mounted appropriately on a substrate. The present invention is not limited to a substrate inspecting apparatus but can also be applied to various other types of inspecting apparatus, such as apparatus for examining the acceptability of printing and apparatus for examining the state of blood.

In the illustrated embodiment, the color camera 1, in response to an instruction from the CPU 5, successively images the parts mounted on the substrate undergoing examination and outputs a video signal indicative of the image obtained. In synchronization with a synchronizing signal provided by the control unit 4, the color camera 1 outputs color video signals R (red), G (green), B (blue) of the three primary colors. These signals represent the input image and are applied to the fuzzy inference unit 2. In this embodiment, the synchronizing signal is delivered from the control unit 4 to the color camera 1. However, it is

EP 0 370 435 A2

permissible to adopt an arrangement in which the color camera 1 generates a synchronizing signal internally, with the control unit 4 acting in accordance with this signal.

The fuzzy inference unit 2 performs preprocessing with regard to each pixel of the input image by performing an inference based on a predetermined fuzzy inference rule, outputs, as the preprocessing data, a code in which one pixel is expressed by four bits. The code is delivered to and stored in the image memory 3. The data stored in the image memory 3 is accepted by the CPU 5, where it is subjected to recognition processing. At the conclusion of processing, the CPU 5 commands the control unit 4 to accept the next image.

Fig. 2 illustrates an example of the construction of the fuzzy inference unit 2, which includes an adder 6, a subtractor 7, a fuzzy processing unit 8 and a determination unit 9.

Though the fuzzy inference unit 2 is illustrated in Fig. 2 as having an analog-type fuzzy architecture, it goes without saying that a digital-type arrangement can be employed, and that binary computer can be adopted which is programmed to execute fuzzy inference processing.

As shown in Fig. 2, the adder 6 is for producing a luminance signal Y by adding the color signals R, G, B from the color camera 1 at a predetermined ratio. If the color camera 1 possesses a function for generating the luminance signal Y, then the adder 6 need not be provided. The subtractor 7 receives the color signals R, G, B as inputs and performs subtraction in suitable fashion to produce color-difference signals R-G, G-B and B-R. The fuzzy processing unit 8 receives the luminance signal Y and the color-difference signals R-G, G-B, B-R as inputs, performs a fuzzy inference operation in accordance with a predetermined fuzzy processing rule, and outputs analog signals a through d indicating whether each pixel is one representing an area which is a substrate, land, part electrode or part body.

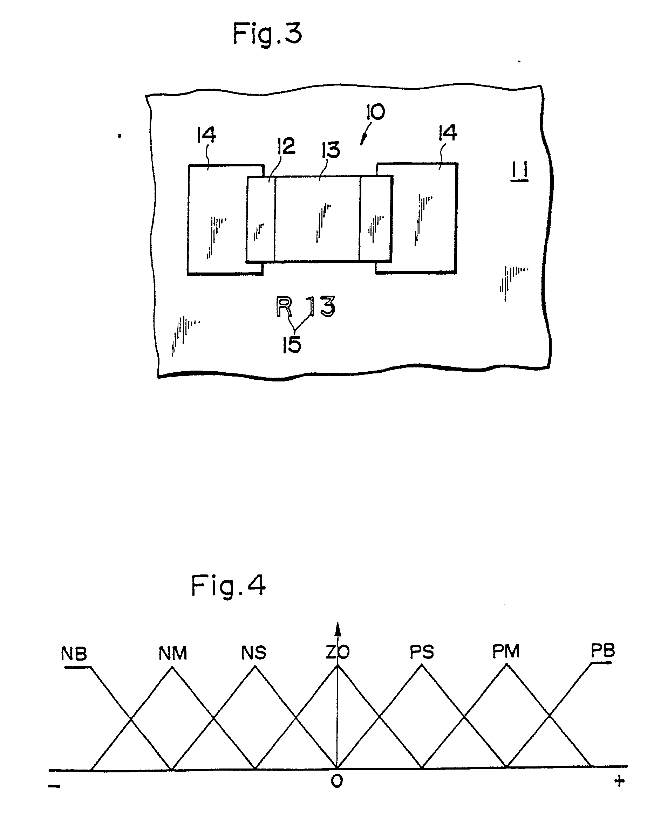

Fig. 3 illustrates a chip part 10, which is mounted on a substrate, as an example of an object undergoing inspection. Shown in Fig. 3 are a substrate 11, an electrode 12 of the chip part 10, a body 13 of the chip part, lands 14 and silk-printed characters 15. The substrate 11 is such that the color of a resist is green, while the surface of the lands 14 is copper- colored. The electrode 12 of the chip part 10 is an achromatic color and shows up white, and the body 13 is an achromatic color and shows up black. Accordingly, in the case of the substrate 11, by way of example, the luminance thereof is somewhat low or medium. When the colors red and green are compared, green is somewhat intense; when the colors green and blue are compared, green is somewhat intense, and when the colors blue and red are compared, both are about the same in intensity.

Thus, fuzzy processing rules, referred to as "if..., then... rules", examples of which will be given below, are set in the fuzzy inference unit 2.

(Rule 1)

If the level of the luminance signal Y is low or medium and the level of the color-difference signal R-G is negative and low, the level of the color-difference signal G-B is positive and low and the level of the color-difference signal B-R is substantially zero, then this pixel is one which represents the substrate.

(Rule 2)

If the level of the luminance signal Y is medium and the level of the color-difference signal R-G is positive and low, the level of the color-difference signal G-B is substantially zero and the level of the color-difference signal B-R is negative and low, then this pixel is one which represents a land.

(Rule 3)

If the level of the luminance signal Y is high or medium and the levels of the color-difference signals R-G, G-B, B-R are all substantially zero, then this pixel is one which represents the electrode.

(Rule 4)

If the level of the luminance signal Y is low or substantially zero and the levels of the color-difference signals R-G, G-B, B-R are all substantially zero, then this pixel is one which represents the body.

4

These items of vague linguistic information such as "low" and "high" are referred to as fuzzy labels. PB (positive big), PM (positive medium), PS (positive small), ZO (almost zero), NS (negative small), NM (negative medium) and NB (negative big) ordinarily are employed as these fuzzy labels. An example of membership functions represented by these fuzzy labels is shown in Fig. 4.

In Fig. 4, the horizontal axis expresses the level of luminance and the color-difference signals. The luminance signal Y takes on values from ZO to PB, and the color-difference signals R-G, G-B, B-R take on values from NB to PB. The vertical axis represents the membership function values.

With reference again to Fig. 2, the fuzzy processing unit 8 finds the degree to which the input data relating to the luminance signal Y and color-difference signals R-G, G-B, B-R conform to the corresponding membership functions of the fuzzy processing rules. (In other words, the fuzzy processing unit 8 obtains the degree of membership in the fuzzy set.)]

The abovementioned Rule 1 is a rule concerning the degree to which an object possesses the inherent quality of the substrate, or "substrate-ness". This rule has four fuzzy propositions, namely a fuzzy proposition relating to the luminance signal (whether the luminance signal level is low or medium), and fuzzy propositions relating to the color-difference signals R-G, G-B and B-R. The abovementioned degree of conformity is obtained for each and every one of these propositions, and the minimum degree of conformity is selected (MIN operation). The minimum degree of conformity selected is outputted as the analog signal a, which represents the degree of "substrate-ness". In a case where there are a plurality of rules concerning "substrate-ness", a predetermined operation (e.g., a MAX operation) is applied to the minimum degrees of conformity in each rule and the result of the operation is outputted as the signal a representing "substrate-ness".

Similarly obtained are signal b representing the degree to which an object possesses the quality of the land based on Rule 2, and signals c, d representing the degree to which an object possesses the qualities of the electrode and the body, respectively, based on Rules 3 and 4. These signals are outputted by the fuzzy processing unit 8 and applied to the determination unit 9, which compares the signals with a predetermined threshold value and forms a coded signal in conformity with the results of the comparison. The coded signal is outputted to the CPU 5.

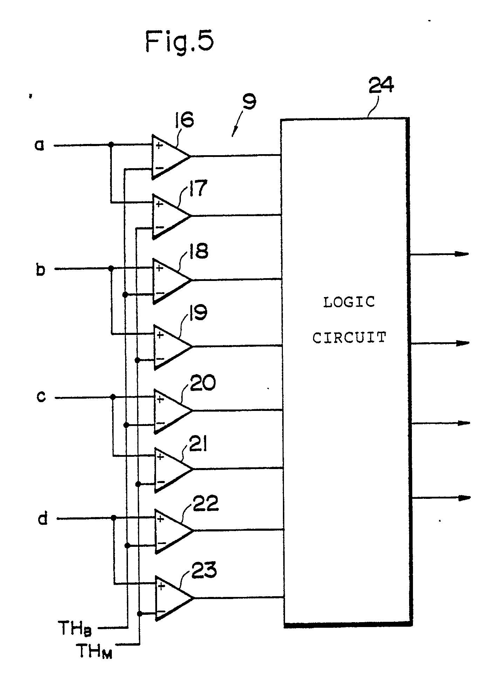

Fig. 5 illustrates a specific example of the determination unit 9, which comprises eight comparators 16 - 23 for outputting logical "1" or "0" upon comparing each of the signals a through d with a high (big)-level threshold value $TH_B$ and a medium-level threshold value $TH_M$, and a logic circuit 24 for producing a predetermined code based on the output from each of the comparators. By way of example, assume that the degree of "substrate-ness" is high (big) when the level of the signal a indicative of the degree of "substrate-ness is higher than the high-level threshold value $TH_B$, that the degree of "substrate-ness" is medium when the level of the signal a is lower than the high-level threshold value $TH_B$ and higher than the medium-level threshold value $TH_M$, and that the degree of "substrate-ness" is low (small) when the level of the signal a is lower than the medium-level threshold value $TH_M$. Similarly, when the degrees to which an object possesses the inherent qualities of the land, electrode and body are expressed by "big", "medium" and "small", the logic circuit 24 produces and outputs four-bit codes having the specific meanings indicated in the following table:

5

| DEGREE OF SUBSTRATE QUALITY | DEGREE OF LAND QUALITY | DEGREE OF ELECTRODE QUALITY | DEGREE OF BODY QUALITY | CODE | MEANING |
|---|---|---|---|---|---|
| BIG | MEDIUM OR SMALL | MEDIUM OR SMALL | MEDIUM OR SMALL | 1100 | DEFINITELY A SUBSTRATE |
| MEDIUM OR SMALL | BIG | MEDIUM OR SMALL | MEDIUM OR SMALL | 1101 | PROBABLY A LAND |
| MEDIUM OR SMALL | MEDIUM OR SMALL | BIG | MEDIUM OR SMALL | 1110 | DEFINITELY AN ELECTRODE |
| MEDIUM OR SMALL | MEDIUM OR SMALL | MEDIUM OR SMALL | BIG | 1111 | DEFINITELY A BODY |
| MEDIUM | SMALL | SMALL | SMALL | 1000 | PROBABLY AN ELECTRODE |
| SMALL | MEDIUM | SMALL | SMALL | 1001 | PROBABLY A LAND |
| SMALL | SMALL | MEDIUM | SMALL | 1010 | PROBABLY AN ELECTRODE |
| SMALL | SMALL | SMALL | MEDIUM | 1011 | PROBABLY A BODY |
| MEDIUM | MEDIUM | SMALL | SMALL | 0100 | PROBABLY A SUBSTRATE OR LAND |
| SMALL | MEDIUM | MEDIUM | SMALL | 0001 | PROBABLY A LAND OR ELECTRODE |
| SMALL | SMALL | MEDIUM | MEDIUM | 0111 | PROBABLY AN ELECTRODE OR BODY |
| MEDIUM | SMALL | SMALL | MEDIUM | 0010 | PROBABLY A BODY OR SUBSTRATE |
| MEDIUM | SMALL | MEDIUM | SMALL | 0110 | PROBABLY A SUBSTRATE OR ELECTRODE |
| SMALL | MEDIUM | SMALL | MEDIUM | 0101 | PROBABLY A LAND OR BODY |
| OTHER COMBINATIONS | | | | 0000 | INDEFINITE |

The codes are stored in the image memory 3 for each and every pixel. As a result, it is clear, depending upon the code, whether each pixel of the input image belongs to the substrate, the land, the electrode or the body. It is also permissible to adopt an arrangement in which the abovementioned processing is performed for each specific area rather than for each pixel.

Accordingly, upon ascertaining the size, etc., of a land or electrode by checking the codes, the CPU 5 is capable of determining what the mounted part is and of judging whether it is acceptable or not.

In the foregoing embodiment, the particulars of the fuzzy processing rules and the form of the membership functions are decided by human beings based on repeated trial and error.

In addition, rules other than fuzzy processing rules can be used, and membership function can take on any form besides the triangular form illustrated.

As many apparently widely different embodiments of the present invention can be made without departing from the spirit and scope thereof, it is to be understood that the invention is not limited to the specific embodiments thereof except as defined in the appended claims.

**Claims**

1. An image preprocessor for preprocessing a video signal which represents an image to be recognized, comprising:

imaging means for imaging an object of recognition and outputting a video signal representing an image of the object;

inference means for preprocessing the video signal by an inference based on settable processing rules and outputting results of the inference as preprocessing data; and

memory means for storing the preprocessing data for the purpose of recognition processing.

2. The image preprocessor according to claim 1, wherein said processing rules are fuzzy processing rules.

3. The image preprocessor according to claim 1, wherein said inference means converts each pixel of an image into a code representing a region of the object of recognition, said inference means outputting said code.

Fig.1

Fig.2

## Fig.3

## Fig.4

# Fig.5

## Fig.6

PRIOR ART